# FASCICULE DE BREVET EUROPEEN

(11) **EP 3 235 025 B1**
(45) Date de publication et mention de la délivrance du brevet: **14.11.2018**
(21) Numéro de dépôt: 15828741.7
(22) Date de dépôt: 14.12.2015
(51) Int. Cl.: H01M 2/16, H01M 2/14, H01M 10/36, H01M 12/08

(54) **PROCÉDÉ DE FABRICATION D'UNE MEMBRANE FLEXIBLE ÉTANCHE À L'EAU ET CONDUCTRICE IONIQUE**
VERFAHREN ZUR HERSTELLUNG EINER WASSERDICHTEN UND IONENLEITENDEN FLEXIBLEN MEMBRAN
METHOD FOR PRODUCING A WATERPROOF AND ION-CONDUCTING FLEXIBLE MEMBRANE

(30) Priorité: 17.12.2014 FR 1462667
(43) Date de publication de la demande: 25.10.2017
(73) Titulaire: Electricité de France, 75008 Paris (FR)
(72) Inventeur: STEVENS, Philippe, 77940 Noisy Rudignon (FR); TOUSSAINT, Gwenaëlle, 77140 Nemours (FR); LANCEL, Gilles, 94230 Cachan (FR); LABERTY-ROBERT, Christel, 75005 Paris (FR); BREGIROUX, Damien, 93260 LES LILAS (FR); SANCHEZ, Clément, 91440 Bures Sur Yvette (FR)
(74) Mandataire: Cabinet Plasseraud
(86) Numéro de dépôt international: PCT/FR2015/053497
(87) Numéro de publication internationale: WO 2016/097571

(56) Documents cités:
- KR-A- 20100 072 532
- US-A1- 2008 057 386
- US-B1- 8 568 921

## Description

### DOMAINE TECHNIQUE

L'invention se rapporte au domaine des séparateurs pour systèmes électrochimiques. Plus particulièrement, elle se rapporte à un procédé de fabrication d'une membrane destinée à protéger une électrode métallique et à la membrane obtenue par ce procédé.

### ARRIÈRE-PLAN TECHNOLOGIQUE

Les cellules électrochimiques se composent généralement d'une électrode négative, d'une électrode positive et d'un électrolyte permettant de faire transiter des porteurs de charge d'une électrode à l'autre.

Les cellules électrochimiques de type métal-air se composent généralement d'un électrolyte liquide. L'électrode négative, typiquement formée à partir d'un composé métallique M, se décompose en ions Mⁿ⁺ lors de la décharge tandis que de l'air est réduit à l'électrode positive, appelée électrode à air, selon les réactions :
Décharge à l'électrode négative : M → Mⁿ⁺ + n e⁻
Décharge à l'électrode positive : O₂ + 2H₂O + 4e⁻ → 4OH⁻

Les métaux alcalins du groupe 1 du tableau périodique utilisés comme matière active pour l'électrode négative ne sont généralement pas stables dans l'électrolyte aqueux, et l'électrode réalisée en un tel matériau alcalin doit être protégée par une séparation étanche à l'eau.

Pour assurer une telle protection, il est courant d'utiliser une membrane rigide en céramique. Les céramiques conductrices permettent d'assurer la double fonction de permettre le passage des ions depuis l'électrode négative vers l'électrolyte liquide et d'empêcher l'électrolyte liquide de rentrer directement en contact avec le métal de l'électrode.

Cependant, l'utilisation de membranes rigides en céramique implique une double contrainte sur l'épaisseur de la membrane. Cette épaisseur doit être suffisamment grande pour garantir une bonne tenue mécanique du fait de la fragilité de la céramique, mais également suffisamment petite pour réduire la résistance ionique de la céramique et limiter les pertes de puissance liées à cette résistance. Ce compromis entre conductivité ionique et tenue mécanique limite les performances de ces membranes.

Lorsque la cellule est rechargée, de l'oxygène est produit à l'électrode positive et le métal est redéposé par réduction à l'électrode négative, selon les réactions :
Recharge à l'électrode négative : Mⁿ⁺ + ne⁻ → M
Recharge à l'électrode positive : 4OH⁻ → O₂ + 2H₂O + 4e⁻

Se pose alors un second problème affectant les électrodes négatives protégées par une membrane rigide en céramique. En effet, le dépôt du métal sur l'électrode négative ne s'effectue généralement pas de manière homogène. Il n'est par conséquent pas rare que l'électrode négative subisse des modifications structurelles importantes après plusieurs cycles de charge/décharge. De telles modifications structurelles se traduisent en pratique par la formation de creux et d'excroissances appelées dendrites sur la surface de l'électrode négative.

Lorsque les ions traversent la membrane en céramique depuis l'électrolyte pour atteindre l'électrode, ils ne se redéposent pas toujours de manière uniforme sur la surface de l'électrode négative. Se créent alors des contraintes mécaniques à l'interface entre la membrane protectrice en céramique et l'électrode négative. Par ailleurs, certaines zones de l'électrode négative ne sont à terme plus en contact direct avec la membrane en céramique, réduisant la surface de contact entre membrane et électrode. Ceci diminue d'autant plus la zone de conduction des ions à travers la membrane et crée des zones non actives sur l'électrode là où le contact entre membrane et électrode est perdu.

La réalisation de membranes rigides en céramique présente un autre inconvénient lié au fait qu'elles ne sont adaptées qu'à une seule taille et forme d'électrode. Le procédé de fabrication d'une membrane en céramique doit être pensé pour s'adapter à la géométrie d'une électrode donnée, et ne permet pas de réaliser des membranes adaptables à tout type d'électrode.

Pour les raisons évoquées ci-avant, il est recherché un moyen de protection d'une électrode métallique de cellule électrochimique qui permette de conduire efficacement les ions entre l'électrode et l'électrolyte, tout en protégeant l'électrode métallique de l'eau.

Le document US2008/057386 décrit une membrane de protection pour anode métallique formée en déposant une couche de Li3N sur une plaque de verre conducteur. Le document US8568921 décrit une membrane de protection d'électrode métallique formée en déposant un matériau du type LTP sur un verre conducteur. Le document KR20100072532 décrit une membrane obtenue par extrusion électro-assistée de d'une fibre organique, suivie de lamination avec un autre polymère.

### EXPOSE DE L'INVENTION

Pour répondre aux problèmes exposés ci-avant, la présente invention propose un procédé de fabrication d'une membrane flexible étanche à l'eau et conductrice ionique destinée à la protection d'une électrode métallique comprenant :
- synthétiser par extrusion électro-assistée des fibres étanches formant un réseau de fibres conductrices ioniques comprenant au moins un premier matériau, le réseau de fibres définissant une première surface et une deuxième surface opposée à la première surface ;
- imprégner le réseau de fibres avec un polymère d'un deuxième matériau, pour former une membrane de protection d'électrode métallique, le réseau de fibres formant des chemins de conduction d'ions entre les première et deuxième surfaces et à travers le polymère du deuxième matériau, la première surface étant destinée à être en contact avec l'électrode métallique.

L'invention procède en deux étapes qui peuvent être mises en oeuvre simultanément ou séquentiellement. Des fibres étanches d'un premier matériau sont réalisées par extrusion sous champ électrique. Ces fibres étanches forment un réseau de fibres aptes à conduire les ions métalliques de l'élément dont est constituée par exemple une électrode négative d'une cellule électrochimique. Le caractère « étanche » des fibres conductrices, par opposition à des fibres poreuses, permet de conduire des ions plus gros que des protons, sans toutefois permettre à de l'eau (sous forme liquide ou sous forme de vapeur) ou un liquide électrolytique de s'écouler le long d'une fibre ou d'être absorbé par la fibre étanche. Le réseau de fibres est imprégné avec un deuxième matériau qui se présente sous la forme d'un polymère. Ce polymère permet de constituer avec le réseau de fibres, une membrane flexible et étanche à l'eau. L'une des surfaces de la membrane est en contact avec l'électrode métallique tandis que l'autre surface est en contact avec un électrolyte.

Le polymère du deuxième matériau de la membrane, étanche à l'eau, forme une matrice qui protège l'électrode de l'électrolyte tandis que les fibres qui traversent ce polymère permettent la conduction d'ions de part et d'autre de la membrane. Typiquement, le polymère du deuxième matériau permet de constituer une matrice électriquement isolante pour les électrons. La matrice peut également être électriquement isolante pour les ions. Ainsi, les ions suivent préférentiellement un chemin de conduction le long des fibres du réseau de fibres.

La membrane ainsi produite protège une électrode métallique de l'eau. La membrane, de par sa composition à base de fibres étanches imprégnées dans un polymère, est flexible, ce qui lui permet d'épouser aisément la forme de l'électrode métallique même lorsque cette dernière subit des remaniements structurels. Ceci peut par exemple se produire après plusieurs cycles de charge et décharge d'une batterie métal-air comprenant l'électrode métallique protégée par la membrane.

L'utilisation spécifique de l'extrusion électro-assistée permet de produire facilement des fibres étanches dont les propriétés mécaniques, la taille et la composition peuvent être contrôlées. Par ailleurs, cette technique permet d'obtenir rapidement un réseau dense de fibres. L'extrusion électro-assistée peut également être combinée à l'étape d'imprégnation en ce sens que le polymère du deuxième matériau peut enrober chaque fibre étanche à la sortie d'un appareil d'extrusion électro-assistée utilisé pour synthétiser la fibre.

Selon un mode de réalisation, le procédé peut en outre comprendre :
- protéger une électrode d'une cellule électrochimique de type métal-air utilisant un métal alcalin, d'un milieu aqueux, au moyen de la membrane, le polymère à l'étape d'imprégnation de la membrane étant étanche à l'eau et au gaz et électriquement isolant.

Dans les cellules électrochimiques de type métal-air utilisant un métal alcalin, l'électrode métallique, correspondant à l'électrode négative, n'est pas stable et se détériore au contact de l'électrolyte aqueux. L'utilisation d'un composé étanche et électriquement isolant en guise de deuxième matériau s'avère ainsi particulièrement adapté pour optimiser la protection de l'électrode négative dans ce contexte particulier. Dans les cellules électrochimiques de type métal-air, il peut également être avantageux de combiner l'étanchéité à l'eau avec une étanchéité au gaz, le gaz constituant une autre source possible de corrosion de l'électrode métallique. L'expression « polymère étanche » signifie ici que le matériau dont est constitué le polymère permet d'obtenir un objet qui forme une barrière à l'eau, aux liquides et aux électrons.

Avantageusement, l'imprégnation du réseau de fibres peut en outre comprendre :
- retirer le polymère sur une surface de la membrane de manière à ce que la première surface du réseau de fibres soit dépourvue de polymère.

Cette étape supplémentaire de retrait d'un excédent de polymère sur une surface de la membrane permet de s'assurer que des chemins de conduction d'ions via les fibres à travers la membrane ne sont pas bloqués par le polymère du deuxième matériau. En rajoutant cette étape, il est possible de procéder à l'imprégnation par trempage du réseau de fibres dans une solution du polymère du deuxième matériau.

Selon un mode de réalisation, le premier matériau se présentant sous la forme de particules inorganiques, le procédé peut en outre comprendre :
- effectuer un frittage sous champ électrique du réseau de fibres préalablement à l'imprégnation du réseau de fibres afin d'assurer une solidarisation des particules inorganiques des fibres étanches du réseau de fibres.

Une telle étape permet de s'assurer que les fibres synthétisées sont étanches, notamment lorsqu'elles sont constituées de particules d'un matériau inorganique. En effet, un frittage sous champ électrique permet de rassembler les particules inorganiques et créer une phase plus homogène au sein de la fibre. Cette étape peut également être intéressante en vue de traiter des fibres comprenant à l'origine un mélange de particules inorganiques conductrices d'ions et un matériau organique. Le frittage, éventuellement combiné avec un traitement thermique préalable, permet dans ce cas précis d'éliminer le matériau organique en vue de créer une phase essentiellement homogène du matériau inorganique.

Selon un mode de réalisation, postérieurement à l'extrusion électro-assistée des fibres étanches, le procédé peut en outre comprendre :
- déposer, sur le réseau de fibres conductrices ioniques, un troisième matériau choisi parmi le groupe constitué d'un polymère à polymérisation photo-activée, un polymère à polymérisation électro-activée.

Une telle étape permet de moduler les propriétés mécaniques de la membrane et assurer une meilleure cohésion entre les fibres étanches et le polymère du deuxième matériau ainsi qu'une meilleure densification du polymère du deuxième matériau.. Il convient néanmoins de veiller à ne pas créer de zones électriquement conductrices dans la membrane entre un électrolyte liquide et l'électrode métallique. L'utilisation d'un polymère à polymérisation photo-activée ou électro-activée s'avère pratique pour densifier le polymère du deuxième matériau et renforcer le lien entre le réseau de fibres et ce polymère pour permettre une étanchéité à l'eau.

De manière avantageuse l'extrusion électro-assistée des fibres étanches peut en outre comprendre :
- extruder les fibres étanches à l'aide d'au moins une buse de diamètre choisi comprenant plusieurs arrivées de matière pour synthétiser une fibre étanche de dimension choisie, et
- contrôler le dosage et l'agencement de matériaux composant les fibres étanches à l'aide des différentes arrivées de matière de la buse.

L'utilisation d'une buse à plusieurs arrivées de matière peut permettre de mettre en oeuvre l'extrusion et l'imprégnation en une seule étape. Les fibres recouvertes sur leur partie périphérique d'un polymère étanche à l'eau peuvent simplement être regroupées et subir une étape supplémentaire de traitement thermique par exemple pour constituer une membrane. Il est également possible de conférer des propriétés de conduction et de tenue mécanique modulable à souhait en jouant sur l'architecture des fibres et leur composition en employant une buse à plusieurs arrivées de matière.

Selon un mode de réalisation, le procédé peut comprendre :
- effectuer l'extrusion électro-assistée et l'imprégnation sur la surface d'une électrode négative métallique d'une batterie métal-air.

Ceci permet notamment de s'assurer que la première surface du réseau de fibres n'est pas totalement recouverte de polymère du deuxième matériau. Un recouvrement total des fibres par le polymère du deuxième matériau pourrait nuire à la conduction des ions entre l'électrode et l'électrolyte liquide d'une cellule électrochimique. En synthétisant les fibres étanches directement sur la surface de l'électrode, et en imprégnant le réseau de fibres sur le support destiné à recevoir la membrane, un contact en vue d'une conduction efficace des ions depuis l'électrode métallique vers l'électrolyte et vice versa peut être obtenu.

La présente invention se rapporte également à une membrane flexible étanche à l'eau et conductrice ionique destinée à la protection d'une électrode métallique comprenant :
- un réseau de fibres comprenant des fibres étanches et conductrices ioniques comprenant au moins un premier matériau, le réseau de fibres définissant une première surface et une deuxième surface opposée à la première surface ;
- un deuxième matériau comprenant un polymère imprégnant le réseau de fibres et formant ainsi une membrane de protection d'électrode métallique, le réseau de fibres formant des chemins de conduction d'ions entre les première et deuxième surfaces et à travers le polymère du deuxième matériau, la première surface étant destinée à être en contact avec l'électrode métallique.

Une telle membrane étanche à l'eau permet de protéger une électrode métallique d'un électrolyte. Elle permet également, grâce à sa flexibilité, d'assurer un bon contact avec l'électrode métallique ainsi qu'une conduction ionique efficace entre l'électrode et un électrolyte grâce aux fibres étanches.

Selon un mode de réalisation, la membrane peut être destinée à la protection d'une électrode d'une cellule électrochimique de type métal-air utilisant un métal alcalin, en milieu aqueux, et le polymère imprégnant la première surface du réseau de fibres peut être étanche.

Un polymère du deuxième matériau étanche peut s'avérer adapté pour la protection d'une électrode métallique négative d'une batterie métal-air utilisant un métal alcalin. L'électrode métallique d'une telle cellule n'est en effet pas stable dans l'électrolyte aqueux.

Selon un mode de réalisation, le réseau de fibres peut comprendre des fibres étanches comportant :
- une partie centrale comprenant des particules du premier matériau, conducteur ionique, et
- une partie périphérique enveloppant la partie centrale comprenant un polymère étanche.

Une telle réalisation permet de s'assurer que les fibres étanches sont entourées par un matériau étanche à l'eau. Le polymère de la partie périphérique est étanche à l'eau. Le polymère étanche peut être le polymère du deuxième matériau, et peut alors être introduit par imprégnation lors de l'étape d'extrusion électro-assistée. Ce polymère étanche peut également être fait en un autre matériau, et peut alors par exemple conférer des propriétés mécaniques particulières à la membrane. Le polymère étanche de la partie périphérique peut également servir à assurer une meilleure cohésion de l'ensemble constitué par le réseau de fibres et le polymère du deuxième matériau. La réalisation d'une fibre à deux couches concentriques permet notamment de créer des chemins de conduction d'ions anisotropes, les ions suivant alors un trajet linéaire le long d'une même fibre de la première à la deuxième surface du réseau de fibres lors de leur migration à travers la membrane.

Selon un autre mode de réalisation, le réseau de fibres peut comprendre des fibres étanches comportant :
- une partie centrale comprenant un quatrième matériau, organique, comprenant un polymère, et
- une enveloppe centrale entourant la partie centrale, comprenant des particules du premier matériau, conducteur ionique, et
- une partie périphérique entourant l'enveloppe centrale, comprenant un polymère étanche.

Alternativement, le réseau de fibres peut comprendre des fibres étanches comportant :
- une partie centrale comprenant des particules du premier matériau, conducteur ionique, et
- une enveloppe centrale entourant la partie centrale, comprenant un quatrième matériau, organique, comprenant un polymère, et
- une partie périphérique entourant l'enveloppe centrale, comprenant un polymère étanche.

Une telle architecture d'une fibre à trois couches concentriques permet de moduler plus finement les propriétés de tenue mécanique et de conduction d'ions dans la membrane.

Notamment, il peut s'avérer avantageux d'utiliser en guise d'enveloppe centrale un polymère qui sert de liant provisoire pour une étape intermédiaire avant frittage sous champ électrique, tel que décrit ci-avant. La partie centrale peut alors comprendre les particules du premier matériau, sous la forme d'un précurseur sol-gel. Un tel agencement peut donner lieu à une fibre plus dense après un traitement thermique qu'une fibre obtenue par frittage d'un mélange au sein de la partie centrale de particules du premier matériau avec un polymère servant de liant.

De manière avantageuse, la première surface peut posséder une affinité physicochimique avec une surface extérieure de l'électrode métallique, ladite affinité physicochimique assurant un contact permanent entre la première surface et la surface extérieure de l'électrode métallique.

L'électrode métallique d'une cellule électrochimique peut typiquement être recouverte d'une fine couche dite couche d'interface, agencée sur la surface extérieure du matériau conducteur que comprend l'électrode. Le polymère du deuxième matériau formant la membrane objet de la présente invention ainsi que les fibres étanches de cette membrane peuvent avantageusement comprendre des composés favorisant un contact par affinité chimique avec cette couche d'interface. L'affinité physicochimique peut typiquement se traduire par la formation de liaisons chimiques entre la première surface et la couche d'interface de l'électrode métallique, ou bien un maintien par force de type Van der Waals. Ainsi, lorsque la forme de l'électrode métallique négative subit des remaniements suite à des cycles de charge et de recharge, le contact entre la membrane protectrice et l'électrode est maintenu sur toute la surface recouverte par la membrane.

Avantageusement, le premier matériau peut être choisi parmi le groupe de composés inorganiques constitué de lithium aluminium titane phosphate (LATP), Li_{1,4}Al_{0,4}Ti_{1,6}(PO₄)₃ Li_{1,2}Al_{0,2}Ti_{1,8}(PO₄)₃, LiTi₂(PO₄)₃, lithium titane phosphate (LTP), Li_{1+x+z}Alₓ(Ti,Ge)₂₋ₓSi_{z}P_{3-z}O₁₂, la pérovskite Li₃ₓLa_{2/3-x}TiO₃, Na₃Si₂Zr_{1,88}Y_{0,12}PO₁₂, Na₃Si₂Zr₂PO₁₂ ou la beta-Al₂O₃ et le deuxième matériau peut être choisi parmi le groupe constitué des polymères fluorés et du poly(fluorure de vinylidène-hexafluoropropylène) (PVDF-HFP).

Ces matériaux s'avèrent particulièrement intéressants pour la conduction d'ions lithium ou sodium et la protection contre un électrolyte aqueux. Une membrane en PVDF-HFP assure également une étanchéité à l'oxygène dégagé en phase de recharge, susceptible autrement d'endommager l'électrode négative. Les polymères fluorés en guise de deuxième matériau présentent en outre l'avantage qu'ils ne gonflent pas au contact de l'eau, évitant ainsi d'exercer une contrainte mécanique sur l'électrode métallique ou d'isoler des fibres de l'électrolyte. Des substances alternatives peuvent être envisagées dans des applications faisant intervenir la conduction d'ions potassium (K), sodium (Na), calcium (Ca).

Avantageusement, la membrane a une épaisseur comprise entre un micron et cent microns.

Une telle épaisseur permet de maintenir une bonne flexibilité de la membrane, et éviter un recouvrement intégral des fibres par le polymère du deuxième matériau.

L'invention peut notamment être mise en application dans une batterie comprenant au moins une cellule électrochimique comportant :
- une électrode négative métallique plongée dans une solution électrolytique liquide ;
- une membrane flexible étanche à l'eau et conductrice ionique destinée à la protection d'une électrode métallique comprenant :
   - un réseau de fibres comprenant des fibres étanches et conductrices ioniques comprenant au moins un premier matériau, le réseau de fibres définissant une première surface et une deuxième surface opposée à la première surface ;
   - un deuxième matériau comprenant un polymère imprégnant le réseau de fibres et formant ainsi une membrane de protection d'électrode métallique, le réseau de fibres formant des chemins de conduction d'ions entre les première et deuxième surfaces et à travers le polymère du deuxième matériau, la première surface étant destinée à être en contact avec l'électrode métallique,
la membrane flexible étanche à l'eau et conductrice ionique entourant l'électrode négative dans la solution électrolytique.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'un montage pour la synthèse d'un réseau de fibres par extrusion électro-assistée ; et
- la figure 2 est une représentation schématique en coupe transversale d'une membrane flexible étanche à l'eau et conductrice ionique destinée à la protection d'une électrode métallique selon l'invention ; et
- la figure 3 est une autre représentation schématique en coupe transversale d'une membrane flexible étanche à l'eau et conductrice ionique destinée à la protection d'une électrode métallique selon l'invention ; et
- la figure 4 est une représentation schématique d'une cellule électrochimique comprenant une électrode métallique recouverte d'une membrane selon l'invention ; et
- la figure 5 est une représentation schématique en coupe longitudinale d'une buse à trois arrivées de matière utilisée pour l'extrusion d'une fibre à trois couches ; et
- la figure 6 est une représentation schématique d'une fibre à trois couches concentriques utilisée dans la membrane selon l'invention ; et
- la figure 7 est une représentation schématique d'une fibre à deux couches concentriques utilisée dans la membrane selon l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

L'invention se rapporte à un procédé de fabrication d'une membrane flexible, étanche à l'eau et conductrice d'ions destinée à la protection d'une électrode métallique. Elle se rapporte également à la membrane ainsi obtenue et à une cellule électrochimique utilisant une telle membrane pour protéger une électrode métallique, par exemple dans une batterie de type métal-air, en particulier une batterie utilisant une électrode en métal alcalin.

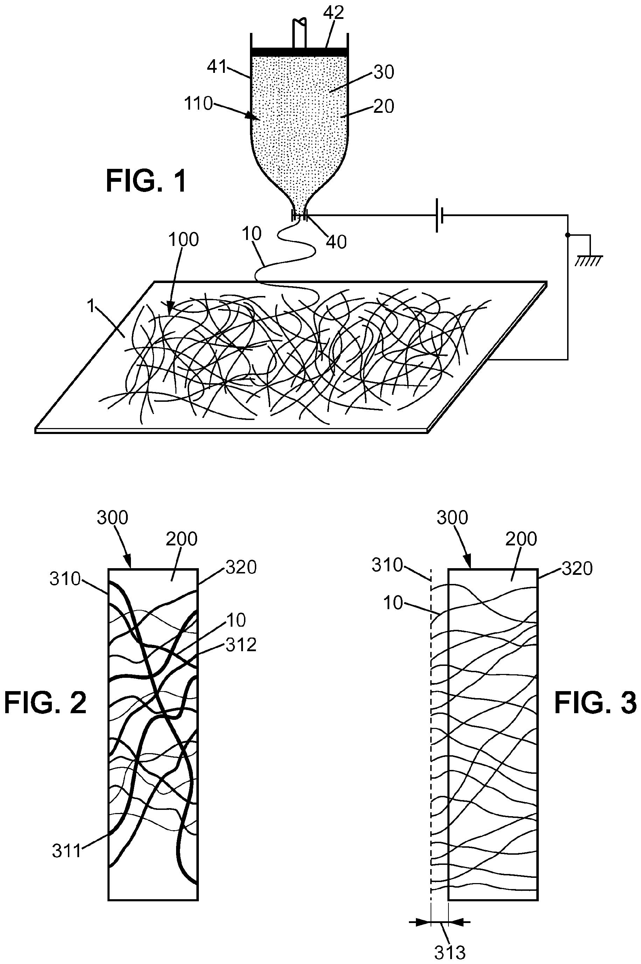

La figure 1 illustre à titre d'exemple, la réalisation d'un réseau de fibres 100 constitué de fibres 10 étanches obtenues par extrusion électro-assistée. L'extrusion électro-assistée s'effectue en soumettant une solution, par exemple constituée d'un premier matériau 20, à un champ électrique. Dans l'exemple de la figure 1, la solution 110 comprend des particules d'un premier matériau 20 inorganique, mélangées à une phase organique 30. Un champ électrique est appliqué au moyen d'un circuit électrique reliant un support de dépôt 1 des fibres 10 à la buse 40 par laquelle s'échappe la solution 110. Le support 1 forme alors une contre-électrode lors du dépôt. La solution 110 est injectée via la buse 40 d'une seringue 41 au moyen d'un pousse-seringue 42.

Le support de dépôt 1 peut également être toute surface permettant de mettre en oeuvre le procédé d'extrusion électro-assistée. Il peut ainsi être avantageux d'effectuer un dépôt des fibres directement sur la surface extérieure d'une électrode métallique destinée à être protégée par la membrane 300.

Le dépôt des fibres 10 sur un support 1 peut se faire de différentes manières en choisissant les paramètres de l'extrusion électro-assistée. Parmi les paramètres qui peuvent être choisis pour le déroulement de l'extrusion électro-assistée figurent par exemple la tension appliquée à la buse, la distance entre la buse et le support 1, la nature et la forme du support, la vitesse d'injection de la solution 110 dans la buse 40 et l'atmosphère dans laquelle se fait le dépôt, notamment son taux d'humidité et sa température.

Le contrôle de ces paramètres permet de définir l'agencement des fibres 10 au sein du réseau de fibres 100, leur enchevêtrement et leur étanchéité. Comme il sera décrit ci-après, l'étanchéité et les propriétés mécaniques d'une fibre peuvent encore être modifiées par une étape de traitement postérieurement à l'extrusion.

Une fois que le réseau de fibres 100 a été réalisé, le procédé objet de l'invention se poursuit par une imprégnation du réseau dans un polymère d'un deuxième matériau 200, en vue de constituer une membrane 300 telle que représentée à titre d'exemple sur les figures 2 et 3.

L'imprégnation du réseau de fibres 100 peut se faire par trempage de ce réseau de fibres dans une solution du polymère du deuxième matériau 200. Il est également possible de verser la solution polymère sous forme liquide sur le support 1 de manière à ce que le deuxième matériau 200 imprègne le réseau de fibres 100. D'autres méthodes d'imprégnation peuvent également être envisagées.

Le polymère du second matériau 200 est choisi de sorte à ce qu'il puisse constituer une matrice protectrice étanche à l'eau dans la membrane 300. Parmi les matériaux permettant d'obtenir un tel effet figurent par exemple les polymères fluorés et du poly(fluorure de vinylidène-hexafluoropropylène) (PVDF-HFP). Ces matériaux présentent la particularité d'être étanches et d'offrir une double étanchéité à l'eau, sous forme liquide ou vapeur, et au gaz. L'étanchéité à l'eau permet de prémunir une électrode métallique que protège la membrane 300 d'une détérioration par un électrolyte liquide ou par la vapeur d'eau. L'étanchéité au gaz trouve notamment application dans la protection d'électrodes métalliques de cellules électrochimiques de type métal-air. Dans de telles cellules, la membrane 300 protège l'électrode de l'oxygène produit en cycle de recharge tout comme de l'oxygène dissous dans l'électrolyte liquide pendant la décharge, et empêche ainsi cet oxygène de corroder l'électrode. D'autres matériaux, par exemples des matériaux ne présentant que la propriété d'être étanches à l'eau, peuvent être envisagés en guise de deuxième matériau 200, notamment lorsque l'électrolyte utilisé n'est pas aqueux.

La figure 2 représente schématiquement une membrane 300 selon l'invention, issue du procédé décrit ci-avant. Cette membrane comprend des fibres 10 d'un premier matériau imprégnées d'un polymère d'un deuxième matériau 200. Les fibres 10 constituent un réseau de fibres 110, définissant une première surface 310 et une deuxième surface 320. Sur l'exemple de la figure 2, ces surfaces 310, 320 correspondent à deux surfaces de la membrane 300.

L'imprégnation des fibres 10 par le polymère du deuxième matériau 200 permet de constituer une membrane 300 étanche à l'eau. Les fibres 10 prises dans le polymère du deuxième matériau 200 forment des chemins de conduction pour des ions. Comme représenté sur la figure 2, une fibre peut former un chemin de conduction depuis l'une de ses extrémités 311 sur la première surface 310 vers son extrémité opposée 312 sur la deuxième surface 320 du réseau de fibres 100.

Dans le but d'assurer le fonctionnement d'une cellule électrochimique aussi bien en charge qu'en décharge, la membrane 300 comprend préférentiellement un nombre important de fibres 10 formant des chemins de conduction de la première surface 310 à la deuxième surface 320. Il convient de remarquer que l'imprégnation peut fortuitement recouvrir intégralement au moins l'une des extrémités d'une fibre 10. Sur le nombre important de fibres que comprend typiquement un réseau de fibres 100, par exemple cent milles fibres par millimètre carré, la proportion de fibres qui ne sont pas utilisées pour conduire les ions n'entrave pas le fonctionnement d'une cellule comprenant une électrode recouverte par la membrane 300. Par ailleurs, plusieurs solutions permettent de remédier à ce recouvrement fortuit.

Il est par exemple possible de retirer une partie du polymère du deuxième matériau 200 après l'étape d'imprégnation afin d'exposer des extrémités de fibres recouvertes par le polymère. Il est également possible de prévoir une épaisseur réduite pour la matrice de polymère du deuxième matériau 200 assurant l'étanchéité de la membrane 300. À titre d'exemple, des épaisseurs typiques comprises entre 1 micron et 100 microns conviennent pour garantir une bonne étanchéité et flexibilité de la membrane sans recouvrir les extrémités d'un nombre important de fibres 10, assurant ainsi une conduction ionique satisfaisante.

Le mode de réalisation représenté sur la figure 3 montre une membrane 300 dans laquelle des fibres 10 comprennent des portions proéminentes s'étendant sur une certaine distance 313 au-delà de la matrice étanche formée par le polymère du deuxième matériau 200. La première surface 310 ne coïncide alors pas avec une surface de cette matrice. Selon d'autres modes de réalisation non représentés, la deuxième surface 320 du réseau de fibres peut également ne pas coïncider avec la matrice que forme le polymère du deuxième matériau 200.

Lorsque de telles membranes sont appliquées sur la surface d'une électrode métallique destinée à être protégée de l'eau, les extrémités 311 de fibres 10 sur la première surface 310 du réseau de fibres 100 entrent en contact avec l'électrode métallique tandis que les extrémités opposées 312 de fibres 10 de la membrane 300 entrent en contact avec l'électrolyte, assurant ainsi un chemin de conduction pour les ions entre l'électrode et l'électrolyte, dans les deux sens.

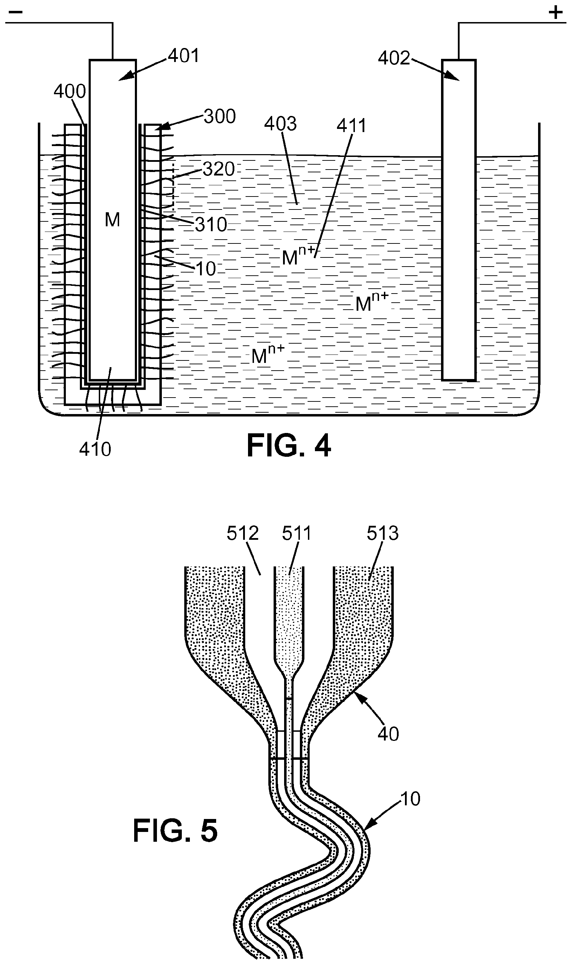

La figure 4 représente schématiquement une cellule électrochimique comprenant une électrode négative 401, une électrode positive 402 et une solution électrolytique liquide 403. L'électrode négative 401 est recouverte au moins dans sa partie immergée d'une membrane 300 selon l'invention. L'électrode 401 est constituée d'un matériau actif métallique 410. En décharge, ce métal transite via les fibres 10 de la membrane 300 vers l'électrolyte 403 sous forme d'ions 411. Comme illustré sur la figure 4, l'électrode 401 comprend en outre sur sa surface extérieure une pellicule 400 conductrice ionique. Une telle pellicule forme une couche d'interface molle permettant d'assurer une affinité chimique avec la membrane 300. Cette couche d'interface 400 permet ainsi de maintenir la membrane 300 en contact avec l'électrode 401 même après plusieurs cycles de charge et de décharge de la cellule, et même si l'électrode 401 subit des remaniements structurels déformant sa surface extérieure. Parmi les matières typiquement utilisées pour constituer des surfaces extérieures d'électrode métalliques formant des couches d'interface, il est par exemple connu d'utiliser un électrolyte polymère constitué de polyéthylène oxyde (PEO) avec Li(CF₃SO₂)2N (LiTFSI).

La flexibilité de la membrane 300, liée à la structure hybride et composite alliant des fibres étanches avec une matrice de polymère, permet à la membrane d'être flexible et ainsi d'épouser la forme de toute électrode métallique 401. Une même membrane 300 peut ainsi non seulement assurer un contact permanent avec une large surface de l'électrode 401 au cours des cycles de charge et de décharge d'une cellule, mais elle peut également être installée sur d'autres électrodes de formes, tailles, voire compositions différentes. Par exemple, l'électrode peut être bobinée.

Cette flexibilité confère à la membrane de l'invention un avantage par rapport aux membranes de l'art antérieur en céramique rigide. Le contact électrique avec la surface extérieure de l'électrode est réduit au court des cycles de charge et décharge d'une cellule avec des membranes rigides. Par ailleurs, une membrane rigide ne peut convenir qu'à une forme spécifique d'électrode.

Contrairement aux membranes utilisées par exemple dans des cellules à hydrogène, dans lesquelles les porteurs de charge impliqués sont des protons, la membrane de l'invention est prévue pour ne conduire que des ions de la première surface 310 à la deuxième surface 320. Les ions typiquement considérés dans des cellules électrochimiques sont le lithium, le calcium, le potassium et le sodium. L'ion H+ ne traverse avantageusement pas la membrane 300. L'utilisation de fibres 10 « étanches » permet de s'assurer que les fibres ne s'imprègnent pas d'un liquide en cours d'utilisation, et ne permettent pas le passage d'eau, d'un liquide ou d'électrons à travers la membrane. Le caractère « étanche » des fibres 10, c'est-à-dire dense au point d'être dépourvu de porosités susceptibles d'entrainer une imprégnation par l'électrolyte liquide voire aqueux, leur permet de remplir de manière optimale leur rôle de conducteur ionique.

La synthèse de fibres 10 étanches par extrusion électro-assistée peut ne nécessiter aucune étape supplémentaire. Cependant, l'étanchéité et la conduction ionique des fibres 10 peut être améliorée de différentes manières.

La plupart des fibres 10 étanches sont synthétisées à partir de particules d'un premier matériau 20 inorganique. Ces particules peuvent être obtenues par des procédés de chimie douce tels que la co-précipitation ou par des procédés de type sol-gel. Leur taille typique est comprise entre 1 nm et 1 micron. Une fibre 10 constituée de particules peut être considérée comme étanche lorsque les particules et l'espace entre ces particules ne permettent pas le passage de l'eau. Pour répondre au mieux à ce critère, il est possible d'emprisonner les particules dans un polymère 30 servant de liant. Les particules du premier matériau 20 sont alors mélangées à une solution contenant un polymère 30 lors de l'extrusion, comme représenté sur la figure 1.

Pour certaines applications, une conduction ionique par des particules d'un premier matériau 20 inorganique en l'absence de polymère 30 est recherchée. Une fibre mixte extrudée à partir d'une solution 110 peut à cet effet subir un traitement thermique pour éliminer le polymère 30 des fibres 10. Ce traitement thermique est suivi d'une étape de frittage, avantageusement mise en oeuvre à des températures intermédiaires ne détériorant pas les particules du premier matériau 20. Un procédé de frittage particulièrement avantageux appelé « spark plasma sintering » selon la terminologie anglo-saxonne, consiste à effectuer le frittage sous champ électrique. Le frittage assure un contact adapté entre les particules du premier matériau 20 constituant une fibre 10, permettant de diminuer la résistance au passage des ions.

Il est également possible d'effectuer une extrusion à partir uniquement de particules d'un premier matériau 20 inorganique, maintenues ensemble dans une fibre 10 sans ajout de polymère dans la fibre. Dans un tel mode de réalisation, il est possible de procéder à un frittage sous champ électrique sans traitement thermique préalable.

La solution électrolytique peut être liquide, voir aqueuse dans le cas par exemple d'une cellule métal-air. La solution électrolytique peut également ne pas être liquide, par exemple un gel ou un polymère. L'étanchéité à l'eau des fibres et de la membrane est toutefois une propriété avantageuse pour préserver une électrode de la vapeur d'eau que peut comprendre une cellule.

L'extrusion électro-assistée permet un contrôle fin des propriétés mécaniques, structurelles et électriques des fibres 10 obtenues.

D'une part, la composition de la solution 110 peut être choisie de manière à ce que les fibres conduisent préférentiellement un type d'ions particulier. À cet égard, des composés choisis parmi lithium aluminium titane phosphate (LATP), Li_{1,4}Al_{0,4}Ti_{1,6}(PO₄)₃ Li_{1,2}Al_{0,2}Ti_{1,8}(PO₄)₃, LiTi₂(PO₄)₃, lithium titane phosphate (LTP), Li_{1+x+z}Alₓ(Ti,Ge)₂₋ₓSi_{z}P_{3-z}O₁₂ ou la pérovskite Li₃ₓLa_{2/3-x}TiO₃ sont particulièrement adaptés pour conduire des ions lithium Li+. D'autres composés conducteurs d'ions Na+, K+ ou Ca2+ peuvent être utilisés. Par exemple, les composés choisis parmi Na₃Si₂Zr_{1,88}Y_{0,12}PO₁₂, Na₃Si₂Zr₂PO₁₂ ou la beta-Al₂O₃ peuvent être sélectionnés pour conduire des ions sodium. Ces ions correspondent aux espèces les plus souvent utilisées dans les électrodes de cellules électrochimiques, dans lesquelles l'invention peut trouver une application pour constituer des membranes de protection d'une électrode contre la corrosion d'un gaz et/ou d'un électrolyte.

L'imprégnation d'un réseau de fibres 100 formé par extrusion électro-assistée peut être complétée par d'autres étapes en vue de conférer des propriétés originales à la membrane 300.

Il est par exemple possible de compléter l'imprégnation par un électro-dépôt ou bien photo-dépôt d'un troisième matériau sous la forme de particules ou de solutions. Ces additifs peuvent par exemple conférer des propriétés mécaniques particulières à la membrane, par exemple en ajustant la densité ou la flexibilité de la membrane 300.

Ainsi, lors de l'imprégnation, un copolymère peut être déposé sur le réseau de fibres 100 ou mélangé avec le polymère du deuxième matériau 200.

Ce copolymère peut être un polymère à polymérisation photo-activée, tel que par exemple 2,2,2-trifluoroethyl methacrylate ou le 1,1,1,3,3,3-hexa-fluoro-isopropyl méthacrylate. Cette propriété peut notamment assurer une meilleure cohésion entre le réseau de fibres 100 et le polymère du second matériau 200. Le copolymère à polymérisation photo-activée peut également augmenter la densité de la membrane, afin de permettre une réduction supplémentaire de son épaisseur tout en conservant les propriétés d'étanchéité à l'eau, de flexibilité et de conduction d'ions.

Le copolymère peut également être un polymère à polymérisation électro-activée, en vue de conférer des effets semblables d'augmentation de densité et/ou de meilleure flexibilité.

L'extrusion électro-assistée permet de mettre en oeuvre l'invention selon plusieurs modes de réalisation différents.

D'une part, un procédé en deux étapes distinctes et successives impliquant l'extrusion puis l'imprégnation d'un réseau de fibres est envisageable. D'autre part, l'imprégnation peut faire partie intégrante de l'extrusion, lorsque la buse 40 comprend plusieurs arrivées de matière et que la seringue 41 comprend plusieurs réservoirs.

Un exemple de réalisation d'une buse 40 à plusieurs arrivées de matière est représenté schématiquement à la figure 5. Un premier compartiment 511 comprend un matériau formant la partie centrale d'une fibre 10. Un deuxième compartiment 512 comprend un matériau formant une enveloppe centrale entourant la partie centrale d'une fibre 10. Un troisième compartiment 513 comprend un matériau formant une partie périphérique de la fibre 10 entourant l'enveloppe centrale. D'autres agencements pour une buse 40 prévoyant plus de trois arrivées de matière ou bien deux ou une seule arrivée de matière peuvent être envisagés.

Au moyen d'une buse 40 à plusieurs arrivées de matière, il est ainsi notamment possible de constituer des fibres 10 comprenant une partie centrale conductrice ionique, et une partie périphérique comprenant le polymère du deuxième matériau 200. L'étape d'imprégnation fait alors partie intégrante de l'étape d'extrusion. L'obtention d'une matrice étanche à l'eau peut par exemple être obtenue soit par une densification des fibres au moyen d'un tassement, ou par une étape supplémentaire de trempage dans un matériau apte à coller ou solidariser les fibres ainsi obtenues. L'étanchéité de la membrane peut également être obtenue par la superposition d'une quantité suffisante de fibres 10, qui peuvent être maintenues en contact les unes aux autres par un collage du matériau polymère constitutif de la partie périphérique des fibres 10.

En utilisant une buse à plusieurs arrivées de matière, de nombreux modes de réalisation pour constituer la membrane peuvent être envisagés. Le choix du diamètre de la buse 40 permet de sélectionner le diamètre des fibres 10 synthétisées. Le contrôle du dosage et de l'agencement des matériaux constituant les fibres 10 étanches permet un ajustement des propriétés mécaniques et électriques de la membrane 300. Quelques exemples sont fournis ci-après.

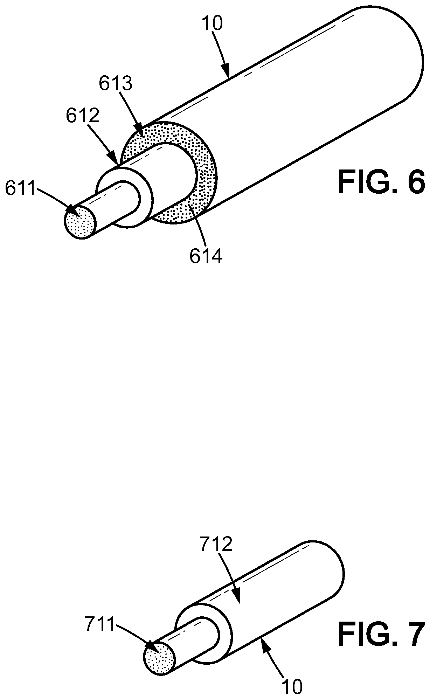

Comme représenté sur la figure 6, une fibre 10 peut comprendre trois couches concentriques. Une partie centrale 611 peut comprendre le premier matériau, conducteur ionique. Une enveloppe centrale 612 entourant la partie centrale peut comprendre un polymère d'un quatrième matériau organique comprenant un polymère. Une partie périphérique 613 entourant l'enveloppe centrale comprend un polymère étanche. Une telle fibre 10 possède des propriétés de tenue mécanique plus facilement modulables qu'une fibre constituée uniquement d'un premier matériau conducteur d'ions. L'ajout d'un troisième matériau 614 dans le polymère étanche permet d'assurer de meilleures interfaces entre les fibres 10 du réseau de fibres 100 et le polymère du deuxième matériau 200.

À titre de variante, la partie centrale peut comprendre un polymère d'un quatrième matériau organique et l'enveloppe centrale entourant la partie centrale peut comprendre le premier matériau conducteur ionique.

La figure 7 représente une fibre 10 à deux couches concentriques dont la réalisation est plus simple. La fibre 10 comprend une partie centrale 711 en un premier matériau inorganique et conducteur ionique et une partie périphérique 712 en un polymère étanche.

Dans un mode de réalisation avantageux, un agencement en deux ou trois couches peut servir pour confiner des particules sous la forme d'un précurseur sol-gel dans une partie centrale, au moyen d'un polymère servant de liant utilisé en guise d'enveloppe centrale. Ce polymère liant n'est présent que provisoirement dans la fibre, et est éliminé lors d'une étape de frittage sous champ électrique, tel que décrit ci-avant. Un tel agencement peut donner lieu à une fibre plus dense après un traitement thermique qu'une fibre obtenue par frittage d'un mélange au sein de la partie centrale de particules du premier matériau avec un polymère servant de liant.

De manière générale, l'enrobage d'une portion conductrice ionique d'une fibre 10 dans un polymère qui ne conduit pas les ions et qui est étanche à l'eau permet de créer des chemins de conduction ionique anisotropes dans la membrane. Par conséquent, les propriétés électriques de la membrane peuvent être ajustées en fonction de la composition des fibres 10 et du polymère du deuxième matériau 200.

Un exemple de réalisation d'un réseau de fibres 10 et d'une membrane 100 est décrit brièvement ci-après.

Un sol comprenant les précurseurs du premier matériau 20 est mélangé avec un polymère support de type PVDF-HFP dans un solvant.

200 mg de polymère sont ajoutés à 20 mL de tétrahydrofuran. La solution est agitée à une température comprise entre 50°C et 100°C pendant un quart d'heure pour dissoudre le polymère, puis refroidie à température ambiante. Sous agitation mécanique, 1 gramme d'acide phénylphosphonique, 200 mg de nitrate de lithium et 0,5 grammes de nitrate d'aluminium nonahydraté sont ensuite ajoutés à la solution.

La solution ainsi créée est utilisée dans une seringue pour synthétiser des fibres par extrusion électro-assistée. Un pousse seringue déplace le liquide à raison de 0,1 mL/mn par la buse de la seringue, sous une tension de 22 kV avec un espacement de 10 cm entre la buse et le support formant contre-électrode. Les fibres sont calcinées pour obtenir un réseau inorganique de fibres d'oxydes Li₁₊ₓAlₓTi₂₋ₓ(PO₄)₃ ou Li₃ₓLa_{2/3-x}TiO₃ conducteur de cations. Les fibres sont imprégnées de polymère en utilisant une solution PVDF-HFP/DMF avec un rapport massique de 3%.

De manière optionnelle, la membrane ainsi constituée peut être retournée et traitée à 170°C pendant 15 mn entre deux plaques métalliques pour que la membrane obtenue conserve une planéité au repos.

Les membranes ainsi obtenues ont une conductivité ionique de 10⁻⁶ Siemens par centimètre pour une membrane de 40 microns d'épaisseur.

L'invention ne se limite pas aux modes de réalisation décrits ci-avant. Notamment, les fibres 10 peuvent être réalisées en un premier matériau intégralement organique et conducteur ionique et étanche à l'eau. Dans un tel mode de réalisation, la membrane 300 est réalisée dans son intégralité dans un matériau organique.

## Revendications

1. Procédé de fabrication d'une membrane (300) flexible étanche à l'eau et conductrice ionique destinée à la protection d'une électrode métallique (401) comprenant :
- synthétiser par extrusion électro-assistée des fibres (10) étanches formant un réseau de fibres (100) conductrices ioniques comprenant au moins un premier matériau (20), le réseau de fibres définissant une première surface (310) et une deuxième surface (320) opposée à la première surface ;
- imprégner le réseau de fibres avec un polymère d'un deuxième matériau (200), pour former une membrane (300) de protection d'électrode métallique, le réseau de fibres formant des chemins de conduction d'ions entre les première et deuxième surfaces et à travers le polymère du deuxième matériau, la première surface étant destinée à être en contact avec l'électrode métallique.

2. Procédé selon la revendication 1, comprenant en outre :
- protéger une électrode (401) d'une cellule électrochimique de type métal-air utilisant un métal alcalin, d'un milieu aqueux, au moyen de la membrane (300), le polymère à l'étape d'imprégnation de la membrane étant étanche à l'eau et au gaz et électriquement isolant.

3. Procédé selon l'une quelconque des revendications précédentes, **caractérisé en ce que** l'imprégnation du réseau de fibres comprend en outre :
- retirer le polymère sur une surface de la membrane de manière à ce que la première surface (310) du réseau de fibres soit dépourvue de polymère.

4. Procédé selon l'une quelconque des revendications précédentes, **caractérisé en ce que**, le premier matériau (20) se présentant sous la forme de particules inorganiques, le procédé comprend en outre :
- effectuer un frittage sous champ électrique du réseau de fibres (100) préalablement à l'imprégnation du réseau de fibres afin d'assurer une solidarisation des particules inorganiques des fibres (10) étanches du réseau de fibres (110).

5. Procédé selon l'une quelconque des revendications précédentes, **caractérisé en ce que**, postérieurement à l'extrusion électro-assistée des fibres étanches, il comprend en outre :
- déposer, sur le réseau de fibres conductrices ioniques, un troisième matériau (614) choisi parmi le groupe constitué d'un polymère à polymérisation photo-activée, un polymère à polymérisation électro-activée.

6. Procédé selon l'une quelconque des revendications précédentes, **caractérisé en ce que** l'extrusion électro-assistée des fibres étanches comprend en outre :
- extruder les fibres (10) étanches à l'aide d'au moins une buse (40) de diamètre choisi comprenant plusieurs arrivées de matière (511, 512 ,513) pour synthétiser une fibre étanche de dimension choisie, et
- contrôler le dosage et l'agencement de matériaux composant les fibres étanches à l'aide des différentes arrivées de matière de la buse.

7. Procédé selon l'une quelconque des revendications précédentes, **caractérisé en ce qu'**il comprend :
- effectuer l'extrusion électro-assistée et l'imprégnation sur la surface d'une électrode (401) négative métallique d'une batterie métal-air.

8. Membrane flexible étanche à l'eau et conductrice ionique destinée à la protection d'une électrode métallique comprenant :
- un réseau de fibres (100) comprenant des fibres étanches et conductrices ioniques comprenant au moins un premier matériau (20), le réseau de fibres définissant une première surface (310) et une deuxième surface (320) opposée à la première surface ;
- un deuxième matériau (200) comprenant un polymère imprégnant le réseau de fibres et formant ainsi une membrane (300) de protection d'électrode métallique (401), le réseau de fibres formant des chemins de conduction d'ions entre les première et deuxième surfaces et à travers le polymère du deuxième matériau, la première surface étant destinée à être en contact avec l'électrode métallique.

9. Membrane selon la revendication 8, **caractérisée en ce que** le réseau de fibres comprend des fibres étanches comportant :
- une partie centrale (711) comprenant des particules du premier matériau, conducteur ionique, et
- une partie périphérique (712) enveloppant la partie centrale comprenant un polymère étanche.

10. Membrane selon la revendication 8, **caractérisée en ce que** le réseau de fibres comprend des fibres étanches comportant :
- une partie centrale (611) comprenant un quatrième matériau, organique, comprenant un polymère, et
- une enveloppe centrale (612) entourant la partie centrale, comprenant des particules du premier matériau, conducteur ionique, et
- une partie périphérique (613) entourant l'enveloppe centrale, comprenant un polymère étanche.

11. Membrane selon la revendication 8, **caractérisée en ce que** le réseau de fibres comprend des fibres étanches comportant :
- une partie centrale (611) comprenant des particules du premier matériau, conducteur ionique, et
- une enveloppe centrale (612) entourant la partie centrale, comprenant un quatrième matériau, organique, comprenant un polymère, et
- une partie périphérique (613) entourant l'enveloppe centrale, comprenant un polymère étanche.

12. Membrane selon l'une quelconque des revendications 8 à 11, **caractérisée en ce que** la première surface possède une affinité physicochimique avec une surface extérieure (400) de l'électrode métallique (401), ladite affinité physicochimique assurant un contact permanent entre la première surface (310) et la surface extérieure (400) de l'électrode métallique (401).

13. Membrane selon l'une quelconque des revendications 8 à 12, **caractérisée en ce que** le premier matériau (20) est choisi parmi le groupe de composés inorganiques constitué de lithium aluminium titane phosphate (LATP), Li_{1,4}Al_{0,4}Ti_{1,6}(PO₄)₃ Li_{1,2}Al_{0,2}Ti_{1,8}(PO₄)₃, LiTi₂(PO₄)₃, lithium titane phosphate (LTP), Li_{1+x+z}Alₓ(Ti,Ge)₂₋ₓSi_{z}P_{3-z}O₁₂, la pérovskite Li₃ₓLa_{2/3-x}TiO₃, Na₃Si₂Zr_{1,88}Y_{0,12}PO₁₂, Na₃Si₂Zr₂PO₁₂ ou la beta-Al₂O₃ et le deuxième matériau (200) est choisi parmi le groupe constitué des polymères fluorés et du poly(fluorure de vinylidène-hexafluoropropylène) (PVDF-HFP).

14. Membrane selon l'une quelconque des revendications 8 à 13, **caractérisée en ce qu'**elle a une épaisseur comprise entre un micron et cent microns.

15. Batterie comprenant au moins une cellule électrochimique comportant :
- une électrode négative métallique (200) plongée dans une solution électrolytique (403) liquide ;
- une membrane (300) flexible étanche à l'eau et conductrice ionique destinée à la protection d'une électrode métallique comprenant :
- un réseau de fibres (100) comprenant des fibres (10) étanches et conductrices ioniques comprenant au moins un premier matériau (20), le réseau de fibres (100) définissant une première surface (310) et une deuxième surface (320) opposée à la première surface ;
- un deuxième matériau (200) comprenant un polymère imprégnant le réseau de fibres et formant ainsi une membrane de protection d'électrode métallique, le réseau de fibres formant des chemins de conduction d'ions entre les première et deuxième surfaces et à travers le polymère du deuxième matériau, la première surface étant destinée à être en contact avec l'électrode métallique,
la membrane flexible étanche à l'eau et conductrice ionique entourant l'électrode négative dans la solution électrolytique.

## Patentansprüche

1. Verfahren zur Herstellung einer wasserdichten und ionenleitenden flexiblen Membran (300), die zum Schutz einer Metallelektrode (401) bestimmt ist, umfassend:
- Synthetisieren durch elektrounterstütztes Extrudieren von dichten Fasern (10), die ein ionenleitendes Fasernetzwerk (100) bilden, das mindestens ein erstes Material (20) umfasst, wobei das Fasernetzwerk eine erste Oberfläche (310) und eine zweite Oberfläche (320) definiert, die der ersten Oberfläche gegenüberliegt;
- Imprägnieren des Fasernetzwerks mit einem Polymer eines zweiten Materials (200), um eine Schutzmembran (300) der Metallelektrode zu bilden, wobei das Fasernetzwerk Ionenleitwege zwischen der ersten und der zweiten Oberfläche und durch das Polymer des zweiten Materials hindurch bildet, wobei die erste Oberfläche dazu bestimmt ist, mit der Metallelektrode in Kontakt zu sein.

2. Verfahren nach Anspruch 1, ferner umfassend:
- Schützen einer Elektrode (401) einer elektrochemischen Zelle des Typs der Alkalimetall-Luft-Zelle, eines wässrigen Mediums mittels der Membran (300), wobei das Polymer beim Schritt des Imprägnierens der Membran wasser- und gasdicht und elektrisch isolierend ist.

3. Verfahren nach einem der vorhergehenden Ansprüche, **dadurch gekennzeichnet, dass** das Imprägnieren des Fasernetzwerks ferner aufweist:
- Entfernen des Polymers auf einer Oberfläche der Membran derart, dass die erste Oberfläche (310) des Fasernetzwerks frei von Polymer ist.

4. Verfahren nach einem der vorhergehenden Ansprüche, **dadurch gekennzeichnet, dass**, wobei das erste Material (20) die Form von anorganischen Teilchen aufweist, das Verfahren ferner aufweist:
- Durchführen eines Sinterns in einem elektrischen Feld des Fasernetzwerks (100) vor dem Imprägnieren des Fasernetzwerks, um ein Verbinden der anorganischen Teilchen der dichten Fasern (10) des Fasernetzwerks (110) zu gewährleisten.

5. Verfahren nach einem der vorhergehenden Ansprüche, **dadurch gekennzeichnet, dass** es nach dem elektrounterstützten Extrudieren der dichten Fasern ferner aufweist:
- Aufbringen eines dritten Materials (614), ausgewählt aus der Gruppe bestehend aus einem Polymer mit photoaktivierter Polymerisation, einem Polymer mit elektroaktivierter Polymerisation, auf dem ionenleitenden Fasernetzwerk.

6. Verfahren nach einem der vorhergehenden Ansprüche, **dadurch gekennzeichnet, dass** das elektrounterstützte Extrudieren der dichten Fasern ferner aufweist:
- Extrudieren der dichten Fasern (10) mit Hilfe von mindestens einer Düse (40) mit ausgewähltem Durchmesser, die mehrere Materialeinlässe (511, 512, 513) aufweist, um eine dichte Faser von ausgewählter Größe zu synthetisieren, und
- Kontrollieren der Dosierung und der Anordnung der Materialien, die die dichten Fasern bilden, mit Hilfe von den verschiedenen Materialeinlässen der Düse.

7. Verfahren nach einem der vorhergehenden Ansprüche, **dadurch gekennzeichnet, dass** es aufweist:
- Durchführen des elektrounterstützten Extrudierens und des Imprägnierens auf der Oberfläche einer negativen Metallelektrode (401) einer Metall-Luft-Batterie.

8. Wasserdichte und ionenleitende flexible Membran, die zum Schutz einer Metallelektrode bestimmt ist, umfassend:
- ein Fasernetzwerk (100), umfassend dichte und ionenleitende Fasern, umfassend mindestens ein erstes Material (20), wobei das Fasernetzwerk eine erste Oberfläche (310) und eine zweite Oberfläche (320) definiert, die der ersten Oberfläche gegenüberliegt;
- ein zweiten Material (200), umfassend ein Polymer, das das Fasernetzwerk imprägniert und auf diese Weise eine Schutzmembran (300) der Metallelektrode (401) bildet, wobei das Fasernetzwerk Ionenleitwege zwischen der ersten und der zweiten Oberfläche und durch das Polymer des zweiten Materials hindurch bildet, wobei die erste Oberfläche dazu bestimmt ist, mit der Metallelektrode in Kontakt zu sein.

9. Membran nach Anspruch 8, **dadurch gekennzeichnet, dass** das Fasernetzwerk dichte Fasern aufweist, umfassend:
- einen mittleren Teil (711), der Teilchen des ersten ionenleitenden Materials umfasst, und
- einen peripheren Teil (712), der den mittleren Teil umhüllt, der ein dichtes Polymer umfasst.

10. Membran nach Anspruch 8, **dadurch gekennzeichnet, dass** das Fasernetzwerk dichte Fasern aufweist, umfassend:
- einen mittleren Teil (611), der ein viertes organisches Material umfasst, das ein Polymer umfasst, und
- eine mittlere Hülle (612), die den mittleren Teil umgibt, die Teilchen des ersten ionenleitenden Materials umfasst, und
- einen peripheren Teil (613), der die mittlere Hülle umgibt, der ein dichtes Polymer umfasst.

11. Membran nach Anspruch 8, **dadurch gekennzeichnet, dass** das Fasernetzwerk dichte Fasern aufweist, umfassend:
- einen mittleren Teil (611), der Teilchen des ersten ionenleitenden Materials umfasst, und
- eine mittlere Hülle (612), die den mittleren Teil umgibt, die ein viertes organisches Material umfasst, das ein Polymer umfasst, und
- einen peripheren Teil (613), der die mittlere Hülle umgibt, der ein dichtes Polymer umfasst.

12. Membran nach einem der Ansprüche 8 bis 11, **dadurch gekennzeichnet, dass** die erste Oberfläche eine physikochemische Affinität zu einer äußeren Oberfläche (400) der Metallelektrode (401) besitzt, wobei die physikochemische Affinität einen permanenten Kontakt zwischen der ersten Oberfläche (310) und der äußeren Oberfläche (400) der Metallelektrode (401) gewährleistet.

13. Membran nach einem der Ansprüche 8 bis 12, **dadurch gekennzeichnet, dass** das erste Material (20) ausgewählt ist aus der Gruppe der anorganischen Verbindungen, die aus Lithiumaluminiumtitanphosphat (LATP), Li_{1,4}Al_{0,4}Ti_{1,6}(PO₄)₃, Li_{1,2}Al_{0,2}Ti_{1,8}(PO₄)₃, LiTi₂(PO₄)₃, Lithiumtitanphosphat (LTP), Li_{1+x+z}Alₓ(Ti,Ge)₂₋ₓSi_{z}P_{3-z}O₁₂, Perowskit, Li₃ₓLa_{2/2-x}TiO₂,Na₂Si₂Zr_{1,88}Y_{0,12}, Na₃Si₂Zr₂Po₁₂ oder Beta-Al₂O₃ besteht, und das zweite Material (200) ausgewählt ist aus der Gruppe, die aus Fluorpolymeren und Poly(vinylidenhexafluorpropylenfluorid) (PVDF-HFP) besteht.

14. Membran nach einem der Ansprüche 8 bis 13, **dadurch gekennzeichnet, dass** sie eine Dicke aufweist, die zwischen einem Mikron und hundert Mikron beträgt.

15. Batterie, umfassend mindestens eine elektrochemische Zelle, umfassend:
- eine negative Elektrode (200), die in eine flüssige Elektrolytlösung (403) eingetaucht ist;
- eine wasserdichte und ionenleitende flexible Membran (300), die zum Schutz einer Metallelektrode bestimmt ist, umfassend:
- ein Fasernetzwerk (100), umfassend dichte und ionenleitende Fasern (10), umfassend mindestens ein erstes Material (20), wobei das Fasernetzwerk (100) eine erste Oberfläche (310) und eine zweite Oberfläche (320) definiert, die der ersten Oberfläche gegenüberliegt;
- ein zweites Material (200), umfassend ein Polymer, das das Fasernetzwerk imprägniert und auf diese Weise eine Schutzmembran der Metallelektrode bildet, wobei das Fasernetzwerk Ionenleitwege zwischen der ersten und der zweiten Oberfläche und durch das Polymer des zweiten Materials hindurch bildet, wobei die erste Oberfläche dazu bestimmt ist, mit der Metallelektrode in Kontakt zu sein,
wobei die wasserdichte und ionenleitende flexible Membran die negative Elektrode in der Elektrolytlösung umgibt.

## Claims

1. A method for producing a waterproof and ion-conducting flexible membrane (300) for protecting a metal electrode (401) comprising:
synthesizing, by electrically assisted extrusion, sealant fibers (10) forming a fiber array (100) of ion-conducting fibers comprising at least one first material (20), the fiber array defining a first surface (310) and a second surface (320) opposite the first surface;
impregnating the fiber array with a polymer of a second material (200), to form a metal electrode protection membrane (300), the fiber array forming ion conduction paths between the first and second surfaces and through the polymer of the second material, the first surface being in contact with the metal electrode.

2. The method according to claim 1, further comprising:
protecting an electrode (401) of a metal-air type electrochemical cell based on an alkali metal from an aqueous medium, by means of the membrane (300), the polymer in the membrane impregnation step being waterproof and gas-proof and electrically insulating.

3. The method according to any one of the preceding claims, **characterized in that** the fiber array impregnation further comprises:
removing the polymer on a surface of the membrane such that the first surface (310) of the fiber array is devoid of polymer.

4. The method according to any one of the preceding claims, **characterized in that** the first material (20) is present in the form of inorganic particles, the method further comprises:
performing sintering under the action of an electrical field of the fiber array (100) prior to impregnating the fiber array to ensure a connection of inorganic particles of sealant fibers (10) in the fiber array (110).

5. The method according to any one of the preceding claims, **characterized in that**, after the electrically assisted extrusion of sealant fibers, the method further comprises:
depositing, on the ion-conducting fiber array, a third material (614) chosen from among the group constituted of a photo-activated polymerization polymer, an electrically activated polymerization polymer.

6. The method according to any one of the preceding claims, **characterized in that** the electrically assisted extrusion of sealant fibers further comprises:
extruding the sealant fibers (10) by using at least one nozzle (40) with a chosen diameter comprising several material inlets (511, 512, 513) for synthesizing a sealant fiber with a chosen dimension, and
controlling the dosage and arrangement of materials composing the sealant fibers by using various material inlets of the nozzle.

7. The method according to any one of the preceding claims, **characterized in that** it
further comprises:
performing electrically assisted extrusion and impregnation on the surface of a metal negative electrode (401) of a metal-air battery.

8. A waterproof and ion-conducting flexible membrane for protecting a metal electrode comprising:
a fiber array (100) comprising sealant and ion-conducting fibers comprising at least one first material (20), the fiber array defining a first surface (310) and a second surface (320) opposite the first surface;
a second material (200) comprising a polymer impregnating the fiber array and thus forming a metal electrode (401) protection membrane (300), the fiber array forming ion conduction paths between the first and second surfaces and through the polymer of the second material, the first surface being in contact with the metal electrode.

9. The membrane according to claim 8, **characterized in that** the fiber array comprises sealant fibers comprising:
a central part (711) comprising particles of the first material, ionic conductor, and
a peripheral part (712) surrounding the central part comprising a sealant polymer.

10. The membrane according to claim 8, **characterized in that** the fiber array comprises sealant fibers comprising:
- a central part (611) comprising a fourth material, which is organic, comprising a polymer, and
- a central envelope (612) surrounding the central part, comprising particles of the first material, ionic conductor, and
- a peripheral part (613) surrounding the central envelope, comprising a sealant polymer.

11. The membrane according to claim 8, **characterized in that** the fiber array comprises sealant fibers comprising:
- a central part (611) comprising particles of the first material, ionic conductor, and
- a central envelope (612) surrounding the central part, comprising a fourth material, which is organic, comprising a polymer, and
- a peripheral part (613) surrounding the central envelope, comprising a sealant polymer.

12. The membrane according to any one of claims 8 to 11, **characterized in that** the first surface has a physicochemical affinity with an outer surface (400) of the metal electrode (401), said physicochemical affinity ensuring permanent contact between the first surface (310) and the outer surface (400) of the metal electrode (401).

13. The membrane according to any one of claims 8 to 12, **characterized in that** the first material (20) may be chosen from among the group of inorganic compounds constituted of lithium aluminum titanium phosphate (LATP), Li_{1,4}Al_{0,4}Ti_{1,6}(PO₄)₃, Li_{1,2}Al_{0,2}Ti_{1,8}(PO₄)₃, LiTi₂(PO₄)₃, lithium titanium phosphate (LTP), Li_{1+x+z}Alₓ(Ti,Ge)₂₋ₓSi_{z}P_{3-z}O₁₂, perovskite Li₃ₓLa_{2/3-x}TiO₃, Na₃Si₂Zr_{1,88}Y_{0,12}PO₁₂, Na₃Si₂Zr₂PO₁₂ or beta-Al₂O₃ and the second material (200) may be chosen from among the group constituted of fluorinated polymers and polyvinylidene fluoride-hexafluoropropylene (PVDF-HFP).

14. The membrane according to any one of claims 8 to 13, **characterized in that** the membrane has a thickness of between one micron and one hundred microns.

15. A battery comprising at least one electrochemical cell comprising:
a metal negative electrode (200) immersed in a liquid electrolyte solution (403);
a waterproof and ion-conducting flexible membrane (300) for protecting a metal electrode comprising:
- a fiber array (100) comprising sealant and ion-conducting fibers (10) comprising at least one first material (20), the fiber array (100) defining a first surface (310) and a second surface (320) opposite the first surface;
- a second material (200) comprising a polymer impregnating the fiber array and thus forming a metal electrode protection membrane, the fiber array forming ion conduction paths between the first and second surfaces and through the polymer of the second material, the first surface being in contact with the metal electrode,
the waterproof and ion-conducting flexible membrane surrounding the negative electrode in the electrolyte solution.
